# EUROPEAN PATENT SPECIFICATION

(11) **EP 1 084 999 B1**
(45) Date of publication and mention of the grant of the patent: **12.07.2006**
(21) Application number: 00120044.3
(22) Date of filing: 14.09.2000
(51) Int. Cl.: C05D 9/02, C05F 11/00, C05G 1/00, C05F 11/10

(54) **Fertilizer with a selenium chelate element**
Selenchelatbildner enthaltendes Düngemittel
Engrais comprenant des agents de chelation du sélénium

(30) Priority: 17.09.1999 JP 26336799; 17.09.1999 JP 26336899
(43) Date of publication of application: 21.03.2001
(73) Proprietor: Nasu, Tamie, Matsumoto-shi, Nagano 390-0802 (JP); Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(72) Inventor: Nasu, Tamie, Matsumoto-shi, Nagano 390-0802 (JP); Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(74) Representative: Bauer, Friedrich

(56) References cited:
- DE-A- 2 808 365
- US-A- 5 504 055
- DATABASE WPI Section Ch, Week 200056 Derwent Publications Ltd., London, GB; Class C04, AN 2000-587934 XP002180673 & CN 1 142 479 A (SOUTHERN SEA MARINE INST CHINESE ACAD SC), 12 February 1997 (1997-02-12)
- DATABASE WPI Section Ch, Week 199751 Derwent Publications Ltd., London, GB; Class C04, AN 1997-550740 XP002180674 & CN 1 129 683 A (ZHAOYUAN TECHNOLOGY DEV CO BEIJING), 28 August 1996 (1996-08-28)
- DATABASE WPI Section Ch, Week 199411 Derwent Publications Ltd., London, GB; Class C04, AN 1994-089218 XP002180675 & JP 06 040786 A (CHIKURA T), 15 February 1994 (1994-02-15)
- DATABASE WPI Section Ch, Week 198837 Derwent Publications Ltd., London, GB; Class C04, AN 1988-261539 XP002180725 & JP 63 190792 A (DAIICHI SEIMO KK), 8 August 1988 (1988-08-08)

## Description

### Technical Field

The present invention relates to a fertilizer with a chelate element comprising amino, penturic and acetic acid and, selenium trioxide as metallic compound, as well as a method for preparing a fertilizer

### Background Art

Fertilizers are applied to soil to supply nutrition to agricultural products for increasing the yield and to prevent degradation of the fertility of the soil. It is known to supply to soil large amounts of three major manurial components of nitrogen (N), phosphorus (P) and potassium (K) indispensable for growth of plants. Nitrogen serves to promote synthesis of protein in a plant, division and multiplication of cells, growth of the roots and sufficient upgrowth of the leaves and stems and to advance absorption and the anabolism of the nutrition. Phosphorus is effective to accelerate growth of the roots to increase the nutrition absorbing area of them and to activate the germination. Also, phosphorus contributes to hasten maturation of plants and increases the yield of seeds and fruits. Also, phosphorus is useful to enhance generation of starch and activity of the enzymes and microorganisms to exterminate noxious insects or vermin and to improve quality of the harvest. Potassium is efficacious to synthesize carbohydrates and nitrogen compounds to promote anabolism, growth of the roots, flowering and fruitage to adjust evaporation of water from plants and to increase the resistance to damages by cold weather and harmful insects. In addition to three major nutrients, the fertilizer may contain calcium (Ca), magnesium (Mg), silicon (Si), manganese (Mn), zinc (Zn), copper (Cu), molybdenum (Mo), iron (Fe), and boron (B) to directly or indirectly assist the good growth of plants.

For example, Japanese Patent Disclosure No. 55-15901 shows a method for stabilizing liquid fertilizer including urea, nitrogen, phosphorus, potassium and magnesium by adding citric acid to the liquid fertilizer to control rise of pH value by hydrolysis of urea without any harmful effect on growth of the crops. Also, Japanese Patent Disclosure No. 58-223681 shows a liquid fertilizer including phosphoric acid, magnesium ion and calcium ion to which hydroxy acetic acid is added to prevent separation of a crystal substance. In addition, Japanese Patent Disclosure No. 9-183681 shows fertilizer with a chelate element produced by mixing metal chemical compound and saccharic acid, to cultivate agricultural products with their good color, excellent aroma and anticancer effect.

Prior art chelate compounds are produced only from saccharic acid and metal, however, the chelate has so lower stability as to be denatured before a living body ingests it.

Moreover, fertilizers are required to contain larger amounts of effective components without inclusion of any disadvantageous substances so that it allows large scale production of crops through easy treatment and inexpensive process for the fertilizers with a low hygroscopicity and caking. In recent years, upgraded agricultural products have been required at a request of consumers who require high quality of crops with good appearance in color and luster, excellent aroma and delicious taste.

US-A-5,504,055 discloses a metal amino acid chelate for a fertilizer that comprises a metal complex produced by blending a metal salt, an amino acid and an organic hydroxy acid in deaerated water. The metal M of this complex is selected from iron, cobalt, copper, zinc, magnesium, manganese, calcium, boron, molybdenum and nickel.

CN 1142479 A indicates a growth regulator for marine plants prepared from sea water extraction, sea soil and inorganic extraction of sea creature, which includes rich nutrients (N, P, K, S, Si, Fe), saccharides and amino acids.

CN 1129683 A demonstrates an organic liquid fertilizer with amino acids prepared from powdered stalk or stem, bran, wood dust and leather.

JP 06-040786 A discloses a fertilizer with amino acid containing hydrolyzed amino acid material such as feather, hoof, human hair and animal hair, and trace elements for example boron, manganese, zinc, copper, iron and molybdenum.

JP 63-190792 A exhibits organic fertilizer with amino acids derived from marine algae, organic acids (acetic acid (CH₃COOH), tartaric acid) as buffer solution, and metal (calcium, magnesium, iron, manganese, copper).

EP-A-608706 discloses the use of waste solution from silk scouring as nitrogenous fertilizer.

CN 1072671 A discloses an amino polysaccharide selenium chelate fertilizer

An object of the present invention is to provide a fertilizer which contains a chelate effective to cultivate agricultural products with their good color, excellent aroma and delicious taste as well as antiseptic and fungicidal. Another object of the present invention is to provide a fertilizer with a chelate which can generate in a living body active enzymes with a detoxifying effect on hydrogen peroxide, organic peroxides, carcinogenic substances and a resistance to oxidation when the living body ingests the agricultural product cultivated with the fertilizer according to the present invention. Still another object of the present invention is to provide a fertilizer with a chelate element which is not denatured before a living body eats the chelate element.

### Disclosure of Invention

The fertilizer according to the present invention comprises on the basis of weight 0.03 to 2 parts of selenium trioxide as metallic compound of the chelate element 1 to 5 parts of an amino acid mixture, 2 to 8 parts of a potassic element, 0.1 to 1 part of a nitrogenous element, and 0.01 to 2 parts of a phosphorous element to provide a pH value of 6.0 to 7.5 when mixed with water, wherein said amino acid mixture contains amino acid derived from waste solution of silk scouring, 0.5 to 1.5 parts of pentaric acid and 0.5 to 1.5 parts of acetic acid. The chelate is derived from the amino acid mixture and selenium trioxide, supplied as one of the fertilizing elements in soil and absorbed by agricultural products with other fertilizing elements. When peoples and animals ingest the agricultural products, the chelate provides an active center incorporated in the peptide chain to be subjected to oxidation-reduction in substrate, and derives enzymes for example glutathione S-transferase (GST) molecular species and glutathione peroxidase (GPx) for detoxification. Electrophile compounds contained in the living body attack the high electronic density of other molecules by electrophilic reaction such as electrophilic substitution and electrophilic addition for covalent bond with an electron of the attacked molecule. For example, the electrophile compound has the electrophile group which may attack the high electronic density area of metal-nitrogen bond of a polymer including metal such as Si-N bond, Al-N bond and B-N bond, to separate the metal-nitrogen bond and form a new bond. The electrophile compound is generated by hydration of carcinogens which contain at least one of polynuclear aromatic hydrocarbons such as benzo pyrene, azo-compound, aromatic amine and other chemical substances to cause mutation, cell toxicity and carcinogenesis by forming a covalent bond with a nucleophillic potion of DNA or protein. The enzymes for detoxification serve as a catalyst for reduction reaction into water or alcohol of highly reactive electrophillic compound with active oxygen, hydrogen peroxide, organic peroxides.

Amino acid mixture is prepared by adding pentaric and acetic acid to amino acid and the mixture includes many functional groups such as amino group to easily generate the chelate with metal. In particular, the amino acid mixture would facilitate to generate the chelate since nitrogen atoms of amino group have the strong electron donative property to promote coordinate bond with the metal as an electronic acceptor. Also, generally amino acid forms five chelate rings in bidentate coodinated complex by carboxyl and amino groups contained in one molecular amino acid when the amino acid reacts with metals into chelate. The chelate prepared by mixing amino acid and metal does not cause precipitation of metallic compounds and does not deteriorate if left for a long period of time because the chelate rings in complex have higher stability than that in simple complex, and the five rings are the stablest in the complex including chelate rings by the chelate effect. After the fertilizer is applied in soil, agricultural products absorb the unchanged chelate in the fertilizer because the chelate is hardly decomposed or deteriorated by microorganisms or chemical substances in soil. When the agricultural products are ingested by living bodies, the chelate can generate with high yield antidotal enzymes which serve as a catalyst for reducing active oxygen.

If the amount of the metallic compound is under 0.01 part, no chelate compound will be generated. Although the amount of the metallic compound exceeds 4 parts, the fertilizer would produce its unchanged effect, but it must be required to prevent contamination of the soil by an excessive amount of the metallic compounds accumulated therein. Addition of pentaric and acetic acid to amino acid under 1 part of the total amount will generate no sufficient amount of the chelate, and the amount over 5 parts will not increase the effect of the fertilizer. The potassium element of 2 to 8 parts will be efficacious to synthesize carbohydrates and nitrogen compounds and to promote anabolism, growth of the roots, flowering and fruitage. The amount of the potassic element under 2 parts will prepare no sufficient amount of carbohydrates and nitrogen compounds. The nitrogeous fertilizer of 0.1 to 1 part will serve to promote synthesis of protein in plants, division and multiplication of cells, growth of the roots and sufficient upgrowth of the leaves and stems and to advance absorption and the anabolism of the nutrition. The amount of the nitrogeous fertilizer under 0.1 part will generate no sufficient amount of protein. The nitrogeous fertilizer of 0.1 to 1 part will promote growth of the roots and active the germination. The amount of the phosphorous element under 0.01 part will be unable to sufficiently promote growth of the roots of agricultural products. The potassic element over 8 parts, nitrogenous element over 1 part, and phosphorous element over 2 parts will undesirably provide an unnecessarily excessive amount of the fertilizer in the soil with unchanged physiologic action of each fertilizer and the oversupply of the fertilizer may exert a possible ill effect on the soil. The pH value of the fertilizer under 6.0 will result in possibility of the soil contamination due to the excessive acidity, and the pH value over 7.5 will affect the stability of the complex.

The method for preparing a fertilizer with a chelate element according to the present invention, comprises the steps as defined in claim 3

### Best Mode for Carrying Out the Invention

Detailed embodiments of the fertilizer according to the present invention are described hereinafter.

The fertilizer according to the present invention comprises on the basis of weight 0.03 to 2 parts of selenium trioxide as metallic compound of the chelate element 1 to 5 parts of an amino acid mixture, 2 to 8 parts of a potassic element, 0.1 to 1 part of a nitrogenous element, and 0.01 to 2 parts of a phosphorous element to provide a pH value of 6.0 to 7.5 when mixed with water. Selenium is an element consisting of glutathione peroxidase (GPx) as an enzyme for reducing electrophillic such as active oxygen into water or alcohol so that the selenium provides an active center incorporated in the peptide chain to be subjected to oxidation-reduction in substrate. Accordingly when people and animals ingests in their living body agricultural products grew up with the fertilizer including the selenium compounds, the ingested selenium compounds will immediately derives glutathione peroxidase (GPx) to inhibit mutation, cell toxicity and carcinogenesis.

The metal of the metallic compound preferably includes metals contained in seawater from which halogen elements such as chlorine and bromine are removed. Zooplankton in seawater ingests phytoplankton which produces organic substances from inorganic substances by anabolism. There are many kind of metals, many metallic elements, and vast numbers of phytoplankton and zooplankton in seawater. When the fertilizer includes the chelate element made from dehalogenated seawater, it has countless nature organic materials made from dead body of plankton. After the fertilizer is applied in soil, nature organic materials in the fertilizer are resolved by microorganisms in soil into inorganic substances which agricultural products absorb as nourishment. Microorganisms in soil are activated by nature organic substances in the fertilizer to continuously resolve organic substances and to preserve the fertile effect of fertilizer for a long period of time with maintenance of plant cultivable power native to the soil. As a result, the fertilizer remarkably promotes growth of safe agricultural products resistive to harmful insect without losing good ecosystem and balance in quantity between nourishment and microorganisms in soil. When the agricultural products are raised by the fertilizer with the chelate obtained from the dehalogenated seawater, they have good flavor for people. Also, when the chelate is formed from metals in the dehalogenated seawater and mixture of amino acid and pentaric and acetic acid, agricultural products absorb the fertilizer as nourishment from the root in soil and they grow up into highly safe crops with good color, flavor and taste.

Also, the chelate may include metals such as magnesium, sodium and other metals inexhaustibly contained in seawater to form an atom of center metallic atom of the chelate. In particular, magnesium performs physiological functions to enhance generation of chlorophyl, transfer of phosphoric acid, synthesis of oils and fats and activation of enzyme and therefore, the agricultural products absorb a large amount of the fertilizer with a chelate element in soil to significantly improve the physiological functions, when the magnesium forms the central metals of the chelate. Although magnesium is very important for muscular absorption mechanism, carbohydrate metabolism and acetylcholine metabolism of the living body, magnesium itself is hardly absorbed into a human or animal's living body by oral administration. On the contrary, when a living body ingests agricultural products grew up with the fertilizer, it absorbs the chelate element of magnesium at high rate of absorption to effectively prevent vasodilatation, excitation and arhythmia of the living body. As a large amount of halogen elements contained in seawater have their strong oxidation power that corrodes agricultural products, the halogen elements are removed from seawater in the embodiment and the chelate is prepared by blending the dehalogenated seawater, amino acid, pentaric and acetic.

The amino acid is derived from waste solution of silk scouring which contains one or more of glycine, alanine, valine, arginine, lysine, aspartic acid, glutaminic acid, serine, threonine, tyrosine, methionine and cysteine. The amino acid mixture is made by adding pentaric and acetic acids to the waste solution of silk scouring. The fibroin of silk contains colloidal sericin enclosing the fibroin. The waste solution is obtained when fibroin is immerged into heated water, soap solution or enzyme solution to dissolve the colloidal selicin in the solution and extracted it to refine silk thread with only fibroin. Accordingly, the waste solution includes proteins such as fibroin and sericin of large molecular weight with many functional groups as well as amino acid such as glycine, alanine, serine and the like. In other words, the waste solution includes many multi-dentate ligands with a plurality of coordination groups to simultaneously form two or more chelate rings when they are coupled with metal by the coordinate bond. The simultaneous generation of the multiple chelate rings promotes the chelating effect and provides stabler chelate compounds compared to generation of a single chelate ring. When the chelate is made from the waste solution of silk scouring and mixed with other constituents, the resultant fertilizer does not degrade for a long period of time. Also, advantageously the chelate can smoothly and certainly be absorbed into agricultural products, while the chelate element is hardly decomposed by microorganisms in soil.

Preferable potassic element may include potassium chloride, potassium sulfate, Carnallite (KCl · MgCl₂ · 6H₂O), potash ores (containing KCl or K₂SO₄), bittern potassium salt (KCl (+ NaCl + MgSO₄)), plant and wood ashes (K₂CO₃ + KHCO₃), kelp ashes (KCl + K₂SO₄), cement dust (sulfate, carbonate and silicate) and blast furnace dust (carbonate and sulfate). The preferable nitrogenous elements may include ammoniacal nitrogen such as ammonium sulfate ((NH₄)₂SO₄), ammonium chloride (NH₄Cl), ammonium nitrate (NH₄NO₃), ammonium phosphate ((NH₄)₂HPO₄, NHH₂PO₄), aqua ammonia (NH₄OH), ammoniated peat (organic acid ammonium salt), ammoniated calcium superphosphate (NH₄H₂PO₄ + (NH₄)₂SO₄ and the like), ammonium sulfate nitrate ((NH₄)₂SO₄ + NH₄NO₃), Ammophos ((NH₄)₂SO₄ + (NH₄)₂HPO₄), ammonium sulfate phosphate ((NH₄)₂SO₄ + (NH₄)₂HPO₄), excrement (ammonium salt) and stable manure (ammonium salt); nitrate nitrogen such as ammonium nitrate (NH₄NO₃), Chile saltpeter (NaNO₃), nitrate of lime (Ca(NO₃)₂), potassium nitrate (KNO₃), ammonium sulfate nitrate ((NH₄)₂SO₄ + NH₄NO₃), nitrochalk (NH₄NO₃) + CaCO₃) and Calurea (Ca(NO₃)₂· 4CO(NH₂)₂; cyanamide nitrogen such as lime nitrogen (CaCN₂); urea nitrogen such as urea (CO(NH₂)₂), and Calurea (Ca(NO₃)₂· 4CO(NH₂)₂); amino nitrogen such as urea-formaldehyde (Uraform) (CO(NH₂)₂-HCHO condensate), oxamide (NH₂-CO-CO-NH₂), guanylurea salt ([NH₂-C(NH)-NH-CO-NH₂] · X, where X is HCl, H₂SO₄, HNO₃, H₃PO₃ and the like), guanidine salt ([NH₂-C(NH)-NH₂] · X, where X is HCl, H₂SO₄, HNO₃, H₃PO₃ and the like) and ammoniated peat (containing CO(NH₂)₂); and protein nitrogen such as fish manure (containing NH₂, NH) and soybean cake (containing NH₂, NH).

Preferable phosphorous element may contain calcium superphosphate (Ca(H₂PO₄)₂ + CaSO₄), concentrated superphosphate (Ca(H₂PO₄)₂), surpentine-superphosphate (calcium superphosphate + surpentine), fused magnesium phosphate (CaO-MgO-P₂O₅-SiO₂ glass), calcined phosphate (Ca₃(PO₄)₂-CaNaPO₄ solid solution), phosphate mixture (calcium superphosphate (concentrated superphosphate) + fused magnesium phosphate), ground phosphate rock (Ca₃(PO₄)₂), precipitated phosphate (CaHPO₄), ammonium sulfate phosphate ((NH₄)₂SO₄ + NH₄H₂PO₄), potassium sulfate ammonium phosphate ((NH₄)₂SO₄ + NH₄H₂PO₄ + K₂SO₄), ball fertilizer (ammonium sulfate + calcium superphosphate + potassium salt + peat, where the form of phosphate is Ca(H₂PO₄)₂), and compound fertilizer (Ca(H₂PO₄)₂, CaHPO₄, Ca₃(HPO₄)₂ and the like).

The fertilizer according to the present invention is very effective to cultivate agricultural products, such as vegetables, with their good color, excellent aroma and delicious taste, and antiseptic and fungus resistant properties, because it is characterized by the chelate compound which consists of an amino acid mixture and selenium trioxide in complex that a living body can easily absorb.

It also has been found that, when a living body ingests the agricultural product cultivated with the fertilizer according to the present invention, the chelate can generate in the living body enzymes for detoxifying active oxygen hydrogen peroxide, organic peroxides, and carcinogenic substances with a resistance to oxidation.

The following shows three examples practiced in accordance with the present invention wherein all parts are based on weight.

### Example 1

Amino acid was derived from waste solution of silk scouring, and amino, pentaric and acetic acids each 1 part were dissolved in water of 3 parts to prepare an acid solution. Separately selenium trioxide of 0.07 part was dissolved in water of 3 parts to generate a water solution which was then added to the acid solution and agitated for 60 minutes for complete dissolution. Subsequently, plant and wood ashes (K₂CO₃, KHCO₃) of 4 parts as a potassic element were added to the mixture which was agitated for 60 minutes. Also, ammonium sulfate ((NH₄)₂SO₄) of 0.5 part as a nitrogenous element and calcium superphosphate (Ca(H₂PO₄)₂ + CaSO₄) of 1 part as a phosphorous element were added to the mixture to obtain the fertilizer with the selenium at the pH value adjusted to 6.6.

### Reference example 2 (not of the invention)

Silver nitrate solution 50 % of 190 parts were added to seawater of 1000 parts which was agitated for 30 minutes. Precipitates generated during the agitation, were removed to obtain the seawater of 1100 parts without halogen elements. Amino acid derived from waste solution of silk scouring of 2 parts and hexalic acid of 0.5 part were added to the dehalogenated seawater to generate a mixed solution which was agitated for 60 minutes. Subsequently, kelp ashes (KCl + K₂SO₄) of 6 parts as a potassic element were added to the mixed solution which was agitated for 60 minutes. Subsequently, aqua ammonia (NH₄OH) of 0.2 part as a nitrogenous element and ground phosphate rock (Ca₃(PO₄)₂) of 0.06 part as a phosphorous element were added to the mixed solution to obtain the fertilizer which contains the chelate compound with the pH value adjusted to 7.1.

### Reference example 3 (not of the invention)

Amino acid was derived from waste solution of silk scouring, and amino, pentaric and acetic acids of each 1 part were added to the dehalogenated seawater of 94 parts obtained according to the method of Example 2 to generate a mixed solution which was then agitated for 60 minutes. Succeedingly, plant and wood ashes (K₂CO₃, KHCO₃) of 4 parts as a potassic element were added to the mixed solution which was agitated for 60 minutes. Also, ammonium sulfate ((NH₄)₂SO₄) of 0.5 part as a nitrogenous element and calcium superphosphate (Ca(H₂PO₄)₂ + CaSO₄) of 1 part as a phosphorous element were added to the mixed solution to obtain the fertilizer containing the chelate at the pH value adjusted to 6.6.

### Cultivation

Each fertilizer of Examples 1 and Reference examples 2 and 3 was diluted with water to one tenth concentration, and 100 cc of the diluted fertilizer was spread around stocks of radish sprouts (daikon sprouts) every week for two months. Two kinds of radish sprouts cultivated with and without the fertilizer, were given for three weeks to F344 female rats of 7-weeks old whose liver, kidney and lung were extracted. Then, comparison was made on color, aroma and taste of the products, amount of the enzymes contained in the internal organs of the rats, antiseptic and fungus resistant properties, detoxifying effect on carcinogenic substances and the like, and a resistance to oxidation regarding the enzymes in the following methods 1 to 3:
1 Examining color, aroma and taste of the radish sprouts in the normal state and in the frizzled condition in high temperature oil.
2 Examining the antiseptic and fungus resistant properties of the radish sprouts chopped into small pieces, placed in water, and left at room temperature.
3 Measuring the amount of glutathione S-transferase (GST) molecular species and glutathione peroxidase (GPx) as enzymes. Each amount of the GST molecular species was determined as follows:

### (i) Preparation of samples for electrophoresis

### (a) Liver and kidney

Added to the extracted liver and kindney of the rats was 0.25 M sucrose-10 mM phosphate buffer solution of pH 7.4 in the amount three times of the weight of each piece for homogenization. 20% SDS of 50 microliters and PBS of 275 microliters were added to the homogenized pieces of 20 microliters, and the mixture was diluted with water into one tenth concentration to determine the total amount of protein by the Lowry method. A diluent was added to the samples to adjust the protein concentration of the mixture to 1 mg/ml, and after boiling the mixture for 2 minutes with heated water, 0.1% BPB of 50 microliters was added to the mixture to adjusut electrophoresis samples.

### (ii) Electrophoresis

Electrophoresis was performed to separate the protein of the electrophoresis samples with 12.5% SDS-polyacrylamide gel (electrophoresis SDS-PAGE) until the protein migrated and passed stack gel at 28 mA, and migrated through separate gel at 36 mA for an hour.

### (iii) Imprinting (Western Blot)

Electric current was supplied to nitrocellulose membranes from a TRANS-BLOT CELL manufactured by BIO RAD under 80 Volts for two hours to imprint on the membranes the protein separated by the electrophoresis.

### (iv) Immunostaining

### (a) Blocking treatment

Nitrocellulose membranes were subjected to blocking treatment for an hour in a 3% skimmed milk TBS buffer solution of pH 7.4.

### (b) Primary antibody

TBS buffer solution containing 3% bovine albumin (BSA) was added to rabbit polyclonal antibody manufactured by Biotrin International Limited which corresponds to any of the rGST A1 (Ya), rGST A3 (Yc), rGST A4 (Yk), rGST M1 (Yb1), rGST M2 (Yb2), and rGST P1 (Yp) for dilution into one thousands concentration. After left overnight in cold room or for an hour at room temperature, the dilution was washed for 5 minutes with the TBS buffer solution, two times for 5 minutes with the TBS buffer solution containing 0.05% Tween 20, and further for 5 minutes with the TBS buffer solution.

### (c) Secondary antibody

The anti-rabbit IgG goat antibody with a label of alkaline phosphatase manufactured by Jacson Immuno Research Laboratories, Inc. was diluted 1/5000 with the TBS buffer solution of pH 7.4, and after necessary reactions in the solution for an hour at room temperature, the dilution was washed similarly to the primary antibody.

### (d) Color development

Coloring reaction was made with a coloring reagent named "Nitro Blue Tetra" manufactured by Pierce Corporation.

### (v) Analysis

The developed color band of each sample was read into the Adobe Photo Shop of the photo retouching software to measure the intensity of the developed color band with NIH image analyzer. The resultant data were compared to examine derivation of the GST molecular species based on the significant difference assay (the t minus assay). The measurements for the GST molecular species were calculated in the form of intensity ratios (without dimension) assuming the intensity "1" of the developed color band regarding the liver and kidney of F344 female rats of 7 weeks old to which commercially available regular solid feedstuff was given for 3 weeks instead of the radish sprouts.

### Results of tests

Tables 1 and 2 show the test results of the enzymes, the GST (nmol/mg protein/min) and GPx (mU/mg protein/min), and the marks (*) indicate significant differences of Samples 1, according to the present invention and reference examples 2 and 3, as compared to Blanks 1 and 2 without the fertilizer according to the present invention. The unit "nmol/mg protein/min" shows amounts of enzymes with nano mol [nmol=U(unit)] derived in 1 milligram of protein for 1 minute. The unit "mU(milli Unit)" means pico mol [mU=pmol].

Table 1 shows that Sample 1 obviously indicates advantageous results on good color, excellent aroma and delicious taste of the products as well as the longer antiseptic and fungus resistant properties, compared to Blank 1. Also, Sample 1 indicates larger amounts of enzymes glutathione S-transferase molecular (GST) species generated in the kidney and liver, compared to Blank 1. GST has a detoxifying effect on carcinogenic substances and the like, and a resistance to oxidation. Sample 1 indicates larger amounts of enzymes, glutathione peroxidase (GPx) generated in the kidney and liver, compared to Blank 1. Table 2 shows that Samples 2 and 3 apparently indicate advantageous results on good color, excellent aroma and delicious taste of the products as well as the longer antiseptic and fungus resistant properties, compared to Blank 2. Also, Samples 2 and 3 indicate larger amounts of enzymes, GST generated in the kidney and liver and larger amounts of enzymes, GPx generated in the kidney, compared to Blank 2.

As a result, it has been found that the fertilizer according to the present invention can cultivate the agricultural products which can remain in the fresh state for a long period of time because the products have antiseptic and fungus resistant properties, and therefore quality of the products is not deteriorated during transportation to a remote place. When people eat and ingest the products, the chelate can generate enzymes having a detoxifying effect on carcinogenic substances and the like, anticancer effect, and a resistance to oxidation in the living body to improve human health.

**Table 1**

| Effect | | Sample 1 | Blank 1 |
|---|---|---|---|
| Color | | Fresh and deep | Normal |
| Aroma | | Strong | Normal |
| Taste | | Rich | Normal |
| Anti-septic and fungus resistant properties | | Fungi occur in 8 days. | Fungi occur in 2 days. |
| GST | Kidney | 274 ±26* | 121±20 |
| | Liver | 1811±173* | 906±62 |
| GPx | Kidney | 270±21* | 224±25 |

**Table 2**

| Effect | | Sample 2 | Sample 3 | Blank 2 |
|---|---|---|---|---|
| Color | | Fresh and deep | Fresh and deep | Normal |
| Aroma | | Strong | Strong | Normal |
| Taste | | Rich | Rich | Normal |
| Anti-septic and fungus resistant properties | | Fungi occur in 9 days. | Fungi occur in 8 days. | Fungi occur in 3 days. |
| GST | Kidney | 289±27* | 276±25* | 119±15 |
| | Liver | 1910±162* | 1823±181* | 899±65 |
| GPx | Kidney | 293±17* | 276±20* | 214±27 |

## Claims

1. A fertilizer with a chelate element, said fertilizer comprising on the basis of weight 0.03 to 2 parts of selenium trioxide as metallic compound of the chelate element, 1 to 5 parts of an amino acid mixture, 2 to 8 parts of a potassic element, 0.1 to 1 part of a nitrogenous element, and 0.01 to 2 parts of a phosphorous element to provide a pH value of 6.0 to 7.5 when mixed with water, wherein said amino acid mixture contains amino acid derived from waste solution of silk scouring, 0.5 to 1.5 parts of pentaric acid and 0.5 to 1.5 parts of acetic acid.

2. A fertilizer according to claim 1, wherein the amino acid is one or more selected from the group of glycine, alanine, valine, arginine, lysine, aspartic acid, glutaminic acid, serine, threonine, tyrosine, methionine and cysteine.

3. A method for preparing a fertilizer with a chelate element comprising the steps of dissolving on the basis of weight, 0.03 to 2 parts of selenium trioxide as metallic compound of the chelate element in water to prepare a water solution;
dissolving 1 to 5 parts of an amino acid mixture in water to prepare an acid solution, wherein said amino acid mixture contains amino acid derived from waste solution of silk scouring, 0.5 to 1.5 parts of pentaric acid and 0.5 to 1.5 parts of acetic acid;
blending said acid solution with said water solution to prepare a mixed solution; and
adding 2 to 8 parts of a potassic element, 0.1 to 1 part of a nitrogenous element, and 0.01 to 2 parts of a phosphorous element to the mixed solution to provide a pH value of 6.0 to 7.5 when mixed with water.

## Patentansprüche

1. Düngemittel mit einer Chelatkomponente, wobei das genannte Düngemittel auf Gewichtsbasis umfasst 0,03 bis 2 Teile Selentrioxid als Metallverbindung der Chelatkomponente, 1 bis 5 Teile einer Aminosäuremischung, 2 bis 8 Teile einer kaliumhaltigen Komponente, 0,1 bis 1 Teil einer stickstoffhaltigen Komponente und 0,01 bis 2 Teile einer phosphorhaltigen Komponente umfasst, so dass beim Mischen mit Wasser ein pH-Wert von 6,0 bis 7,5 entsteht, wobei die genannte Aminosäuremischung Aminosäuren, die aus dem Abwasser der Seidenentbastung stammen, 0,5 bis 1,5 Teile Pentarsäure und 0,5 bis 1,5 Teile Essigsäure enthält.

2. Düngemittel gemäß Anspruch 1, wobei die Aminosäure(n) eine oder mehrere aus der Gruppe aus Glycin, Alanin, Valin, Arginin, Lysin, Asparaginsäure, Glutaminsäure, Serin, Threonin, Tyrosin, Methionin und Cystein ist bzw. sind.

3. Verfahren zur Herstellung eines Düngemittels mit einer Chelatkomponente, wobei das Verfahren umfasst die Schritte des Auflösens von, auf Gewichtsbasis, 0,03 bis 2 Teilen Selentrioxid als Metallverbindung der Chelatkomponente in Wasser zur Herstellung einer wässrigen Lösung,
des Auflösens von 1 bis 5 Teilen einer Aminosäuremischung in Wasser zur Herstellung einer Säurelösung, wobei die genannte Aminosäuremischung Aminosäuren, die aus dem Abwasser der Seidenentbastung stammen, 0,5 bis 1,5 Teile Pentarsäure und 0,5 bis 1,5 Teile Essigsäure enthält,
des Mischens der genannten Säurelösung mit der genannten wässrigen Lösung zur Herstellung einer gemischten Lösung, und
des Zugebens von 2 bis 8 Teilen einer kaliumhaltigen Komponente, 0,1 bis 1 Teil einer stickstoffhaltigen Komponente und 0,01 bis 2 Teilen einer phosphorhaltigen Komponente zur gemischten Lösung zur Erzielung eines pH-Werts von 6,0 bis 7,5 nach der Mischung mit Wasser.

## Revendications

1. Engrais comprenant un élément chélaté, ledit engrais comprenant, sur la base du poids, 0,03 à 2 parts de trioxyde de sélénium à titre de composé métallique de l'élément chélaté, 1 à 5 parts d'un mélange d'acides aminés, 2 à 8 parts d'un élément potassique, 0,1 à 1 parts d'un élément azoté, et 0,01 à 2 parts d'un élément phosphoreux pour donner une valeur de pH de 6,0 à 7,5 lorsqu'il est mélangé avec de l'eau, et dans lequel ledit mélange d'acides aminés contient un acide aminé dérivé d'une solution de rejet de lavage de soie, 0,5 à 1,5 parts d'acide pentarique et 0,5 à 1,5 parts d'acide acétique.

2. Engrais selon la revendication 1, dans lequel l'acide aminé est un ou plusieurs élément(s) choisi(s) parmi le groupe composé de glycine, alanine, valine, arginine, lysine, acide aspartique, acide glutaminique, sérine, thréonine, tyrosine, méthionine, et cystéine.

3. Procédé pour préparer un engrais avec un élément chélaté, comprenant les étapes consistants à
dissoudre, sur la base du poids, 0,03 à 2 parts de trioxyde de sélénium à titre de composé métallique de l'élément chélaté dans de l'eau pour préparer une solution aqueuse ;
dissoudre 1 à 5 parts d'un mélange d'acides aminés dans de l'eau pour préparer une solution acide, dans laquelle ledit mélange d'acides aminés contient un acide aminé dérivé d'une solution de rejet de lavage de soie, 0,5 à 1,5 parts d'acide pentarique et 0,5 à 1,5 parts d'acide acétique ;
mélanger ladite solution acide avec la dissolution aqueuse pour préparer une solution mixte ; et
ajouter 2 à 8 parts d'un élément potassique, 0,1 à 1 parts d'un élément azoté, et 0,01 à 2 parts d'un élément phosphoreux à la solution mixte pour donner une valeur de pH de 6,0 à 7,5 lors du mélange avec l'eau.
